# EUROPÄISCHE PATENTSCHRIFT

(11) **EP 2 812 588 B1**
(45) Veröffentlichungstag und Bekanntmachung des Hinweises auf die Patenterteilung: **28.06.2017**
(21) Anmeldenummer: 13703019.3
(22) Anmeldetag: 04.02.2013
(51) Int. Cl.: F16C 1/12

(54) **VORRICHTUNG ZUR UMKEHR DER BEWEGUNGS- UND/ODER BETÄTIGUNGSRICHTUNG EINES BETÄTIGUNGSZUGES EINES MECHANISMUS**
DEVICE FOR REVERSING THE DIRECTION OF MOVEMENT OR ACTUATION OF AN ACTUATION CABLE OF A MECHANISM
DISPOSITIF D'INVERSION DE LA DIRECTION DU MOUVEMENT OU DE L'ACTIONNEMENT D'UN CABLE D'ACTIONNEMENT D'UN MÉCANISME

(30) Priorität: 06.02.2012 DE 102012201709
(43) Veröffentlichungstag der Anmeldung: 17.12.2014
(73) Patentinhaber: Johnson Controls GmbH, 51399 Burscheid (DE)
(72) Erfinder: KULKARNI, Ketan, 50670 Köln (DE); BEILING, Thomas, 41470 Neuss (DE)
(74) Vertreter: Finger, Catrin
(86) Internationale Anmeldenummer: PCT/EP2013/052124
(87) Internationale Veröffentlichungsnummer: WO 2013/117510

(56) Entgegenhaltungen:
- EP-A2- 1 741 866
- US-A1- 2011 140 461

## Beschreibung

Die Erfindung betrifft eine Vorrichtung zur Umkehr der Bewegungs- und/oder Betätigungsrichtung eines Betätigungszuges eines Mechanismus gemäß dem Oberbegriff des Anspruchs 1.

Im Stand der Technik werden Betätigungszüge für entfernt in einem Fahrzeug angeordnete Mechanismen derart angeordnet oder verlegt, dass eine Bewegungs- und/oder Betätigungsrichtungsumkehr nicht notwendig ist. Dies erfordert unter Umständen eine Verlegung des Betätigungszuges in einem großen Bogen, wodurch Bauraumbedarf und Länge des Betätigungszuges ansteigen.

Die FR 2 765 926 A1 beschreibt eine Vorrichtung zur Umkehr der Bewegungs- und/oder Betätigungsrichtung eines Betätigungszuges eines Mechanismus.

Die GB 166 655 A beschreibt eine Vorrichtung mit mehreren Betätigungszügen, welche gemeinsam oder unabhängig voneinander aktuierbar sind.

Die US 4 526 057 A beschreibt eine Vorrichtung, welche mittels eines Betätigungszuges zwei gekoppelte Mechanismen betätigt.

Die EP 1 741 866 A2 beschreibt eine Vorrichtung zum motor- und krafttätigen Bewegen einer um eine Schwenkachse schwenkbaren Klappe eines Kraftfahrzeugs. Die Vorrichtung umfasst eine Gasdruckfeder, aus deren Zylinder einseitig eine Kolbenstange herausführt und an einem feststehenden Bauteil des Kraftfahrzeugs angelenkt ist. Dabei ist der Zylinder der Gasdruckfeder in einem Abstand zur Schwenkachse an der Klappe angelenkt. Parallel zur Gasdruckfeder ist ein Führungsrohr angeordnet, das an seiner dem Zylinder zugewandten Seite einen sich in deren Längserstreckungsrichtung erstreckenden Schlitz besitzt. Mit seinem einen Ende ist das Führungsrohr ebenfalls an dem feststehenden Bauteil des Kraftfahrzeugs befestigt. In dem Führungsrohr ist ein Schub-/Zugstück verschiebbar geführt, das an seinem einen Ende mit einem Seil verbunden ist, welches in einer sich an das Führungsrohr anschließenden flexiblen Hülle zu einem reversierbaren motorischen Antrieb führt, der das Seil zum Öffnen der Klappe schiebend und zum Schließen der Klappe ziehend antreiben kann. Dazu ist das Schub-/Zugstück über ein radial durch den Schlitz ragendes Anschlussteil fest mit dem Zylinder verbunden.

Die US 2011/0140461 A1 beschreibt ein mechanisches Heckklappenschließsystem. Dieses umfasst einen aus einem Seil und einer Seilumhüllung gebildeten Bowdenzug, wobei ein erstes Seilende des Seils mit einem in einer Führung beweglich angeordneten Teil formschlüssig verbunden ist und das diesem ersten Seilende zugeordnete erste Hüllenende der Seilumhüllung mit dieser Führung für das bewegliche Teil formschlüssig verbunden ist. Das zweite Seilende ist mit einem Bedienhebel verbunden und das diesem zweiten Seilende zugeordnete zweite Hüllenende der Seilumhüllung stößt an eine unbewegliche Halterung an. Gemäß der üblichen Funktion eines solchen Bowdenzugs bewegt sich durch Ziehen am zweiten Seilende mittels des Bedienhebels das Seil relativ zur unbeweglichen Halterung der Seilumhüllung und somit auch relativ zur ebenfalls unbeweglichen Seilumhüllung, so dass das mit dem ersten Seilende verbundene bewegliche Teil relativ zur mit dem ersten Hüllenende verbundenen Führung für das bewegliche Teil bewegt wird.

Aufgabe der vorliegenden Erfindung ist es, eine gegenüber dem Stand der Technik verbesserte Vorrichtung zur Umkehr der Bewegungs- und/oder Betätigungsrichtung eines Betätigungszuges eines Mechanismus anzugeben.

Hinsichtlich der Vorrichtung zur Umkehr der Bewegungs- und/oder Betätigungsrichtung eines Betätigungszuges eines Mechanismus wird die Aufgabe durch die im Anspruch 1 angegebenen Merkmale gelöst. Vorteilhafte Weiterbildungen der Erfindung sind Gegenstand der Unteransprüche.

Bei der Vorrichtung zur Umkehr der Bewegungs- und/oder Betätigungsrichtung eines Betätigungszuges eines Mechanismus ist erfindungsgemäß ein Gleitkolben in einem gestellfest angeordneten Gehäuse gleitend verschiebbar angeordnet und mittels des Betätigungszuges verschiebbar, wobei seitlich am Gleitkolben zumindest ein Betätigungselement angeordnet ist, dessen Bewegungsrichtung der des Betätigungszuges entgegengesetzt ist und welches mit dem Mechanismus mechanisch gekoppelt ist. Dadurch ist auf einfache und bauraumsparende Weise eine Umkehr der Bewegungs- und/oder Betätigungsrichtung des Betätigungszuges ermöglicht.

In einer vorteilhaften Ausführungsform sind am Gleitkolben mehrere Betätigungselemente angeordnet, wodurch mittels eines einzelnen Betätigungszuges auf einfache Weise mehrere Betätigungselemente aktuierbar sind.

Das Gehäuse ist erfindungsgemäß zylinder- oder becherförmig ausgeformt und weist ein offenes erstes Ende und ein geschlossenes zweites Ende auf.

In einer besonders vorteilhaften Ausführungsform ist außenseitig des Gehäuses am geschlossenen Ende an einer Stirnseite und/oder an einem Außenumfang zumindest ein Befestigungsabschnitt angeordnet. Mittels dieses Befestigungsabschnitts kann das Gehäuse gestellfest an oder in beispielsweise einem Fahrzeug angeordnet werden.

Erfindungsgemäß ist in eine Gehäusewandung des Gehäuses eine nutförmige Aussparung eingebracht, deren Längsausdehnung sich in Längsrichtung des Gehäuses erstreckt und welche die Gehäusewandung vollständig durchdringt, wobei ein Aufnahmeabschnitt des Gleitkolbens zumindest abschnittsweise in der nutförmigen Aussparung angeordnet ist. Dabei überragt der Aufnahmeabschnitt des Gleitkolbens die Gehäusewandung des Gehäuses, so dass das Betätigungselement daran anordenbar ist.

Erfindungsgemäß ist innenseitig des geschlossenen Endes im Gehäuse ein Aufnahmeabschnitt ausgebildet, welcher korrespondierend zu einem endseitig am Betätigungszug angeformten Aufnahmenippel ausgebildet ist und selbigen form- und/oder kraftschlüssig gestellfest aufnimmt.

Erfindungsgemäß ist zentral im Gleitkolben eine Durchführung für ein Drahtseil des Betätigungszuges angeordnet, durch welche das Drahtseil im Betrieb der Vorrichtung hindurchgeführt ist, während sich eine Hülle des Betätigungszuges am Gleitkolben abstützt.

Die Vorrichtung umfasst vorteilhafterweise ein als Druckfeder ausgebildetes Federelement, welches derart im Gehäuse angeordnet ist, dass sich ein erstes Ende des Federelements innenseitig des geschlossenen Endes am Gehäuse abstützt, während ein zweites Ende des Federelements auf den Gleitkolben einwirkt. Somit ist eine Bewegung des Gleitkolbens mittels der Federwirkung unterstützbar.

Besonders vorteilhafterweise ist die Vorrichtung derart als Kompensator ausgebildet, dass im Falle eines Defektes oder einer Fehlfunktion des Betätigungszuges der mittels des Betätigungselementes angekoppelte Mechanismus verschließbar ist, wobei das Federelement derart ausgeformt ist, dass eine Entlastung des komprimierten Federelements einen Verschluss des Mechanismus aktuiert. Auf diese Weise ist ein angekoppelter Mechanismus in eine Ruhe- oder Sicherheitsposition bringbar, so dass ein weiterer Schaden abwendbar ist.

Ausführungsbeispiele der Erfindung werden im Folgenden anhand von Zeichnungen näher erläutert.

Dabei zeigen:
- Fig. 1: schematisch eine perspektivische Ansicht einer erfindungsgemäßen Vorrichtung zur Umkehr der Bewegungs- und/oder Betätigungsrichtung eines Betätigungszuges eines Mechanismus,
- Fig. 2: schematisch eine Schnittdarstellung einer erfindungsgemäßen Vorrichtung zur Umkehr der Bewegungs- und/oder Betätigungsrichtung eines Betätigungszuges eines Mechanismus,
- Fig. 3: schematisch eine Explosionsdarstellung einer erfindungsgemäßen Vorrichtung zur Umkehr der Bewegungs- und/oder Betätigungsrichtung eines Betätigungszuges eines Mechanismus und
- Fig. 4: schematisch eine Teilschnittdarstellung einer erfindungsgemäßen Vorrichtung zur Umkehr der Bewegungs- und/oder Betätigungsrichtung eines Betätigungszuges eines Mechanismus.

Einander entsprechende Teile sind in allen Zeichnungen mit den gleichen Bezugszeichen versehen.

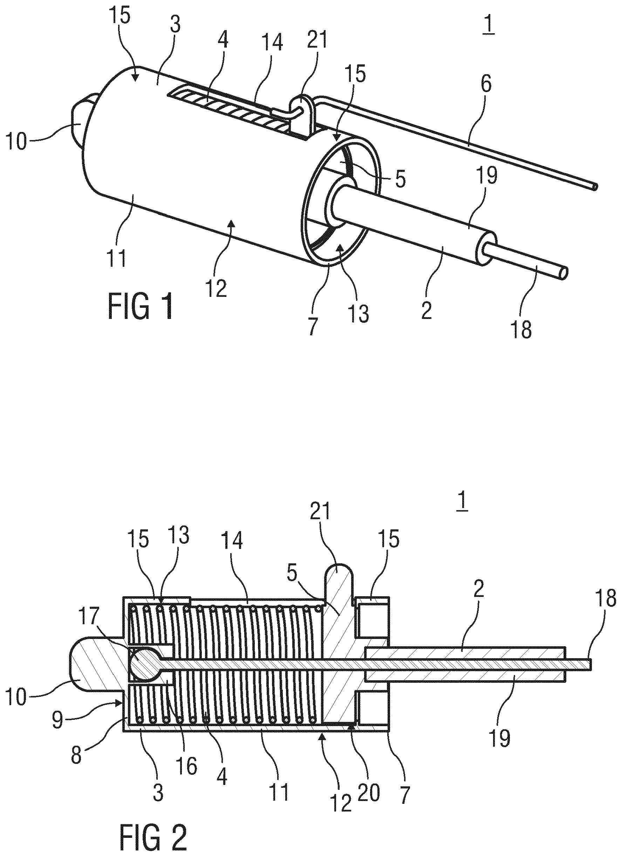

In Figur 1 ist schematisch eine perspektivische Ansicht einer erfindungsgemäßen Vorrichtung 1 zur Umkehr der Bewegungs- und/oder Betätigungsrichtung eines Betätigungszuges 2 eines nicht abgebildeten Mechanismus dargestellt.

In Figur 2 ist schematisch eine Schnittdarstellung der erfindungsgemäßen Vorrichtung 1 zur Umkehr der Bewegungs- und/oder Betätigungsrichtung des Betätigungszuges 2 eines Mechanismus dargestellt.

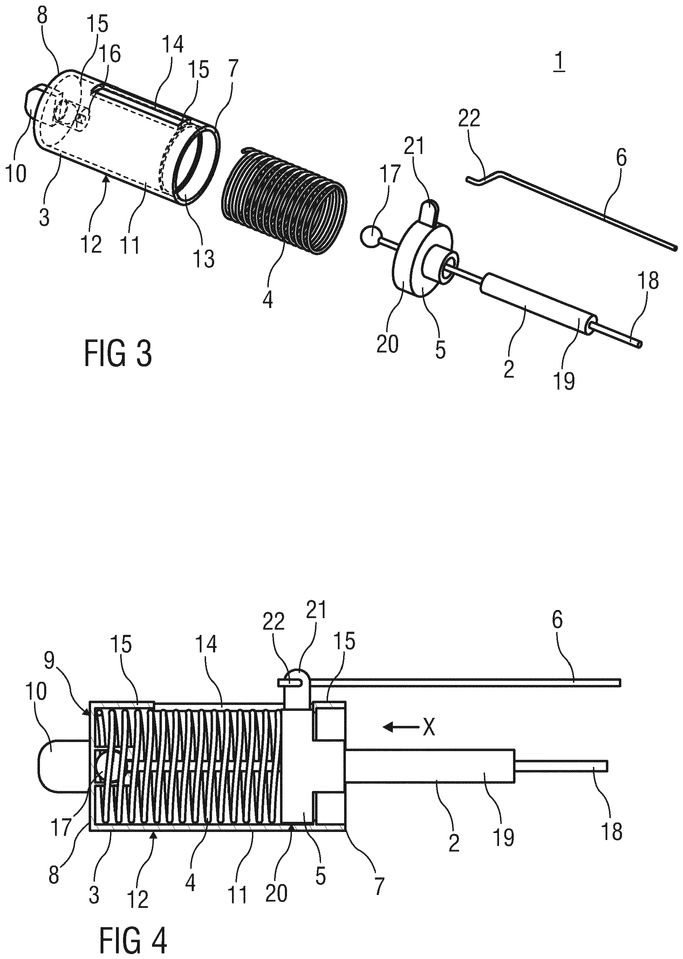

In Figur 3 ist schematisch eine Explosionsdarstellung der erfindungsgemäßen Vorrichtung 1 zur Umkehr der Bewegungs- und/oder Betätigungsrichtung des Betätigungszuges 2 eines Mechanismus dargestellt.

Eine solche Vorrichtung 1 umfasst zumindest ein Gehäuse 3, ein Federelement 4, einen Gleitkolben 5, einen Betätigungszug 2 und zumindest ein Betätigungselement 6.

Das Gehäuse 3 ist vorzugsweise becherförmig ausgeformt und weist ein offenes erstes Ende 7 und ein geschlossenes zweites Ende 8 auf. Außenseitig des geschlossenen Endes 8 kann an einer Stirnseite 9 des Gehäuses 3 ein Befestigungsabschnitt 10 angeordnet sein. Mittels dieses Befestigungsabschnitts 10 kann das Gehäuse 3 gestellfest an oder in einem Fahrzeug angeordnet werden. Dieser Befestigungsabschnitt 10 kann beispielsweise als herkömmliche Ausformung ausgebildet sein, welche form- und/oder kraftschlüssig in einer korrespondierend ausgeformten, nicht dargestellten Befestigungsvorrichtung im Fahrzeug aufnehmbar ist. In alternativen, nicht dargestellten Ausführungsformen können im Befestigungsabschnitt 10 herkömmliche, variabel ausformbare Aussparungen eingebracht sein, in welchen herkömmliche Befestigungsmittel anordenbar sind.

Eine Gehäusewandung 11 des Gehäuses 3 ist an ihrem Außenumfang 12 und an ihrem Innenumfang 13 rund oder nahezu rund ausgeformt und kann aus einem metallischen Werkstoff, einem Kunststoff oder einem Kunststoffgemisch gefertigt werden. In die Gehäusewandung 11 ist eine nutförmige Aussparung 14 eingebracht, deren Längsausdehnung sich in Längsrichtung des Gehäuses 3 erstreckt und welche die Gehäusewandung 11 vollständig durchdringt. Dabei ist die Länge der Aussparung 14 im Vergleich zur Länge des Gehäuses 3 verringert, so dass endseitig der Aussparung 14 jeweils ein Stegbereich 15 in Richtung der Enden 7 und 8 in der Gehäusewandung 11 ausgebildet ist.

Innenseitig des geschlossenen Endes 8 ist im Gehäuse 3 ein Aufnahmeabschnitt 16 ausgebildet, welcher korrespondierend zu einem endseitig am Betätigungszug 2 angeformten Aufnahmenippel 17 ausgebildet ist und selbigen form- und/oder kraftschlüssig gestellfest aufnimmt.

Beim Betätigungszug 2 handelt es sich um einen herkömmlichen Betätigungs- oder Seilzug, welcher ein bewegliches Maschinenelement zur Übertragung einer mechanischen Bewegung und/oder einer Zugkraft mittels einer flexibel verlegbaren Kombination aus einem Drahtseil 18 und einer in Verlaufsrichtung stabilen, das Drahtseil in Unfangsrichtung umschließenden Hülle 19 ist. Endseitig ist am Drahtseil 18 der Aufnahmenippel 17 angeordnet.

Im Gehäuse 3 ist der Gleitkolben 5 gleitend verschiebbar angeordnet, wobei ein Außenumfang 20 des Gleitkolbens 5 korrespondierend zum Innenumfang 13 der Gehäusewandung 11 ausgeformt ist. Der Gleitkolben 5 ist vorzugsweise aus einem Material, beispielweise Kunststoff, gefertigt, welches mit dem Material des Gehäuses 3 eine Reibpaarung mit einem niedrigen Reibungskoeffizienten ausbildet.

Zentral im Gleitkolben 5 ist eine Durchführung für das Drahtseil 18 des Betätigungszuges 2 angeordnet, durch welche das Drahtseil 18 im Betrieb der Vorrichtung 1 hindurchgeführt ist, während sich die Hülle 19 des Betätigungszuges 2 am Gleitkolben 5 abstützt.

Seitlich am Gleitkolben 5 ist ein Aufnahmeabschnitt 21 an- oder ausgeformt, an welchem das Betätigungselement 6 form- und/oder kraftschlüssig anordenbar ist. Dazu ist im Aufnahmeabschnitt 21 beispielsweise eine Aussparung ausgeformt, in welcher ein endseitig am Betätigungselement 6 ausgeformter Befestigungsabschnitt 22 anordenbar ist.

Das Betätigungselement 6 ist beispielsweise als herkömmlicher starrer Rundstab ausgebildet, an dessen erstem Ende der Befestigungsabschnitt 22 beispielsweise durch Abkanten oder Biegen an- oder ausgeformt ist und dessen zweites Ende in nicht dargestellter Weise mit dem Mechanismus gekoppelt ist.

Das Federelement 4 ist vorzugsweise als Druckfeder, beispielsweise als herkömmliche Schraubenfeder, ausgeformt und derart im Gehäuse 3 angeordnet, dass sich ein erstes Ende des Federelements 4 innenseitig des geschlossenen Endes 8 am Gehäuse 3 abstützt, während ein zweites Ende des Federelements 4 auf den Gleitkolben 5 einwirkt. Dabei ist das Federelement 4 korrespondierend zum Innenumfang 13 der Gehäusewandung 11 ausgeformt.

In Figur 4 ist schematisch eine teiltransparente Darstellung der erfindungsgemäßen Vorrichtung 1 zur Umkehr der Bewegungs- und/oder Betätigungsrichtung des Betätigungszuges 2 eines Mechanismus dargestellt.

Im Betrieb der Vorrichtung 1 wird mittels des Betätigungszuges 2 der Gleitkolben 5 im Gehäuse 3 verschoben. Dabei bewirkt eine Verschiebung des Gleitkolbens 5 in Richtung X eine Komprimierung des Federelements 4.

Das komprimierte Federelement 4 unterstützt eine Rückbewegung des Betätigungszuges 2 und des Gleitkolbens 5.

In einer nicht dargestellten vorteilhaften Ausführungsform können am Aufnahmeabschnitt 21 des Gleitkobens 5 mehrere Betätigungselemente 6 angeordnet werden, wodurch mittels eines einzelnen Betätigungszuges 2 mehrere Betätigungselemente 6 gleichzeitig aktuierbar sind. Alternativ können am Gleitkolben 5 mehrere Aufnahmeabschnitte 21 angeordnet sein.

In einer weiteren nicht dargestellten vorteilhaften Ausführungsform kann die Vorrichtung 1 als Kompensator ausgebildet sein, wobei die Vorrichtung 1 im Falle eines Defektes oder einer Fehlfunktion des Betätigungszuges 2 den mittels des Betätigungselementes 6 angekoppelten Mechanismus verschließt. Dabei wird das Federelement 4 derart ausgeformt, dass eine Entlastung des komprimierten Federelements 4 einen Verschluss des Mechanismus aktuiert.

### Bezugszeichenliste

- 1: Vorrichtung
- 2: Betätigungszug
- 3: Gehäuse
- 4: Federelement
- 5: Gleitkolben
- 6: Betätigungselement
- 7: erstes Ende
- 8: zweites Ende
- 9: Stirnseite
- 10: Befestigungsabschnitt
- 11: Gehäusewandung
- 12: Außenumfang
- 13: Innenumfang
- 14: nutförmige Aussparung
- 15: Stegbereich
- 16: Aufnahmeabschnitt
- 17: Aufnahmenippel
- 18: Drahtseil
- 19: Hülle
- 20: Außenumfang
- 21: Aufnahmeabschnitt
- 22: Befestigungsabschnitt
- X: Richtung

## Patentansprüche

1. Vorrichtung (1) zur Umkehr der Bewegungs- und/oder Betätigungsrichtung eines Betätigungszuges (2) eines Mechanismus, wobei ein Gleitkolben (5) in einem gestellfest angeordneten Gehäuse (3) gleitend verschiebbar angeordnet ist und mittels des Betätigungszuges (2) verschiebbar ist, wobei seitlich am Gleitkolben (5) zumindest ein Betätigungselement (6) angeordnet ist, dessen Bewegungsrichtung der des Betätigungszuges (2) entgegengesetzt ist und welches mit dem Mechanismus mechanisch gekoppelt ist, wobei in eine Gehäusewandung (11) des Gehäuses (3) eine nutförmige Aussparung (14) eingebracht ist, deren Längsausdehnung sich in Längsrichtung des Gehäuses (3) erstreckt und welche die Gehäusewandung (11) vollständig durchdringt, wobei ein Aufnahmeabschnitt (21) des Gleitkolbens (5) zumindest abschnittsweise in der nutförmigen Aussparung (14) angeordnet ist, wobei das Gehäuse (3) zylinderförmig ausgeformt ist und ein offenes erstes Ende (7) und ein geschlossenes zweites Ende (8) aufweist, wobei innenseitig des geschlossenen Endes (8) im Gehäuse (3) ein Aufnahmeabschnitt (16) ausgebildet ist, welcher korrespondierend zu einem endseitig an einem Drahtseil (18) des Betätigungszuges (2) angeformten Aufnahmenippel (17) ausgebildet ist und selbigen form- und/oder kraftschlüssig gestellfest aufnimmt, wobei zentral im Gleitkolben (5) eine Durchführung für das Drahtseil (18) des Betätigungszuges (2) angeordnet ist, durch welche das Drahtseil (18) im Betrieb der Vorrichtung (1) hindurchgeführt ist, während sich eine Hülle (19) des Betätigungszuges (2) am Gleitkolben (5) abstützt.

2. Vorrichtung (1) nach Anspruch 1,
**dadurch gekennzeichnet, dass** am Gleitkolben (5) mehrere Betätigungselemente (6) angeordnet sind.

3. Vorrichtung (1) nach einem der vorherigen Ansprüche,
**dadurch gekennzeichnet, dass** außenseitig des Gehäuses 3 am geschlossenen Ende 8 an einer Stirnseite 9 und/oder an einem Außenumfang zumindest ein Befestigungsabschnitt 10 angeordnet ist.

4. Vorrichtung (1) nach einem der vorherigen Ansprüche,
umfassend ein als Druckfeder ausgebildetes Federelement (4), welches derart im Gehäuse (3) angeordnet ist, dass sich ein erstes Ende des Federelements (4) innenseitig des geschlossenen Endes (8) am Gehäuse (3) abstützt, während ein zweites Ende des Federelements (4) auf den Gleitkolben (5) einwirkt.

5. Vorrichtung (1) nach Anspruch 4,
**dadurch gekennzeichnet, dass** die Vorrichtung (1) derart als Kompensator ausgebildet ist, dass im Falle eines Defektes oder einer Fehlfunktion des Betätigungszuges (2) der mittels des Betätigungselementes (6) angekoppelte Mechanismus verschließbar ist, wobei das Federelement (4) derart ausgeformt ist, dass eine Entlastung des komprimierten Federelements (4) einen Verschluss des Mechanismus aktuiert.

## Claims

1. A device (1) for reversing the movement and/or actuation direction of an actuating cable (2) of a mechanism, wherein a sliding piston (5) is arranged so as to be displaceable in a sliding manner in a housing (3) arranged fixed on a frame, and can be displaced by means of the actuating cable (2), wherein at least one actuating element (6) is arranged laterally on the sliding piston (5), the movement direction of which actuating element is opposed to that of the actuating cable (2) and which is mechanically coupled to the mechanism, wherein a groove-shaped recess (14) is placed in a housing wall (11) of the housing (3), the longitudinal extent of which recess extends in the longitudinal direction of the housing (3) and which completely penetrates the housing wall (11), wherein a receiving section (21) of the sliding piston (5) is at least partially arranged in the groove-shaped recess (14)
wherein the housing (3) is formed cylindrically and has an open first end (7) and a closed second end (8),
wherein on the inside of the closed end (8), a receiving section (16) is formed in the housing (3), said receiving section being formed in a manner corresponding to a receiving nipple (17) which is formed on an end side of a cable wire (18) of the actuating cable (2), and receives said receiving nipple in an interlocking and/or frictional manner such that it is fixed on the frame,
wherein a leadthrough for the cable wire (18) of the actuating cable (2) is arranged centrally in the sliding piston (5), through which leadthrough the cable wire (18) is led during the operation of the device (1), while a sheath (19) of the actuating cable (2) is supported on the sliding piston (5).

2. The device (1) as claimed in claim 1, **characterized in that** a plurality of actuating elements (6) are arranged on the sliding piston (5).

3. The device (1) as claimed in one of the preceding claims, **characterized in that**, on the outside of the housing (3) at the closed end (8), at least one fastening section (10) is arranged on an end side (9) and/or on an outer circumference.

4. The device (1) as claimed in one of the preceding claims, comprising a spring element (4) which is designed as a compression spring and is arranged in the housing (3) in such a manner that a first end of the spring element (4) is supported on the housing (3) on the inside of the closed end (8) while a second end of the spring element (4) acts on the sliding piston (5).

5. The device (1) as claimed in claim 4, **characterized in that** the device (1) is designed as a compensator in such a manner that, in the event of a defect or a malfunction of the actuating cable (2), the mechanism coupled by means of the actuating element (6) can be closed, wherein the spring element (4) is formed in such a manner that release of the compressed spring element (4) actuates a closure of the mechanism.

## Revendications

1. Dispositif (1) pour l'inversion de la direction du mouvement et/ou de l'actionnement d'un câble d'actionnement (2) d'un mécanisme, dans lequel un piston coulissant (5) est disposé en mouvement coulissant dans un boîtier (3) solidaire du bâti et peut être déplacé au moyen du câble d'actionnement (2), dans lequel au moins un élément d'actionnement (6) est disposé latéralement au piston coulissant (5), dont la direction d'actionnement est opposée à celle du câble d'actionnement (2) et qui est mécaniquement couplé au mécanisme, dans lequel une découpe en forme de rainure (14) est pratiquée dans une paroi de boîtier (11) du boîtier (3), dont l'extension longitudinale s'étend dans la direction longitudinale du boîtier (3) et qui traverse complètement la paroi de boîtier (11), dans lequel une partie de positionnement (21) du piston coulissant (5) est disposée au moins en partie dans la découpe en forme de rainure (14), dans lequel le boîtier (3) est de forme cylindrique et présente une première extrémité ouverte (7) et une deuxième extrémité fermée (8), dans lequel une partie de logement (16) est formée dans le boîtier (3) du côté intérieur de l'extrémité fermée (7), qui est formée de façon correspondante à une bille de positionnement (17) façonnée à l'extrémité d'un câble métallique (18) du câble d'actionnement (2) et qui la contient par emboîtement et/ou par adhérence solidairement au bâti, dans lequel un passage est disposé au centre du piston coulissant (5) pour le câble métallique (18) du câble d'actionnement (2), à travers lequel le câble métallique (18) est mené pendant le fonctionnement du dispositif (1), tandis qu'une gaine (19) du câble d'actionnement (2) s'appuie sur le piston coulissant (5).

2. Dispositif (1) selon la revendication 1, **caractérisé en ce que** plusieurs éléments d'actionnement (6) sont disposés sur le piston coulissant (5).

3. Dispositif (1) selon une des revendications précédentes, **caractérisé en ce qu'**au moins une partie de fixation (10) est disposée extérieurement au boîtier (3) à l'extrémité fermée (8) sur un côté frontal (9) et/ou à un pourtour extérieur.

4. Dispositif (1) selon une des revendications précédentes, comprenant un élément de ressort (4) réalisé en forme de ressort de pression, qui est disposé dans le boîtier (3) de telle manière qu'une première extrémité de l'élément de ressort (4) s'appuie sur le boîtier (3) sur le côté intérieur de l'extrémité fermée (8), tandis qu'une deuxième extrémité de l'élément de ressort (4) agit sur le piston coulissant (5).

5. Dispositif (1) selon la revendication 4, **caractérisé en ce que** le dispositif (1) est réalisé en forme de compensateur, de telle manière qu'en cas de défaut ou de dysfonctionnement du câble d'actionnement (2), le mécanisme couplé au moyen de l'élément d'actionnement (6) puisse être fermé, dans lequel l'élément de ressort (4) est formé de telle manière qu'un délestage de l'élément de ressort comprimé (4) actionne un blocage du mécanisme.
